# EUROPEAN PATENT APPLICATION

(11) **EP 0 883 125 A2**
(43) Date of publication of application: **09.12.1998**
(21) Application number: 98304289.6
(22) Date of filing: 29.05.1998
(51) Int. Cl.: G11B 20/10, G11B 20/12, H04N 5/76

(54) **Digital versatile disc and reproduction apparatus using the same**

(30) Priority: 02.06.1997 KR 9722781
(71) Applicant: Samsung Electronics Co., Ltd., Suwon-city, Kyungki-do (KR)
(72) Inventor: Heo, Jae-Hoon, Kwonsun-gu, Suwon-city, Kyungki-do (JP)
(74) Representative: Chugg, David John

(57) **Abstract**

A digital versatile disc (DVD) contains a high quality of audio while maintaining compatibility with the DVD-video format. The DVD includes a plurality of audio streams corresponding to each title among which a particular audio stream stores basic audio data according to a DVD-video format, at least one of the remaining audio streams stores extended audio data corresponding to the basic audio data, and an audio stream attribute of a video title set stores additional data which enables the extended audio data to be identified. A DVD reproduction apparatus for reproducing a DVD includes a reader (404, 406) to read the record data from the DVD, a syntax parser for syntax-parsing the data read by the reader (404, 406, 408) and to output a resultant basic audio stream and an extended audio stream, and an audio decoder (414) to receive and process the basic audio stream and the extended audio stream from the syntax parser (408) and to output an audio signal having an improved audio quality using the extended audio data provided with the basic audio data. Thus, a higher audio quality can be provided in comparison with the audio quality of audio data stored on a DVD according to the DVD-video format.

## Description

The present invention relates to a digital versatile disc (DVD) and a reproduction apparatus using the same, and more particularly, to a DVD for storing audio data capable of improving an audio quality provided by a DVD-video format, in audio streams of the DVD according to the DVD-video format, and a reproduction apparatus for reproducing the stored audio data.

According to the DVD-video format, DVD-video data are partitioned into a video data area, a sub-picture data area, a navigation data area, and an audio data area. The video, sub-picture and audio data occupy the entire data capacity of 4.7/8.5Gbytes and a transmission rate of 10.08Mbps, and the audio transmission rate of 6Mbps at a maximum is allowed. The video data area of the DVD-video stores the data compressed by the MPEG-1/MPEG-2 video encoding methods, and the audio data area thereof stores eight audio data streams at maximum according to the methods such as a linear pulse code modulation (LPCM), AC-3, MPEG-2, Digital Theater System (DTS), a Sony Digital Dynamic Sound (SDDS). The apparatus for reproducing the DVD-video decodes the video data recorded in the DVD-video to restore it into a moving picture and then converts and outputs the restored data to be displayed, and decodes audio data and converts the digital audio data into an analog audio signal to then be output. When audio data in Linear PCM format is used for the DVD-video, a maximum audio quality can be provided.

However, when the LPCM is used, the DVD-video serves two channels with respect to audio data quantized by a sampling frequency of 96KHz and a 24-bit quantization and serves eight channels with respect to audio data quantized by a sampling frequency of 48KHz and a 16-bit quantization. In this case, the sampling frequency and the number of channels exceeding the above cannot be used. Since the existing DVD-video and a reproduction apparatus using the same stores and processes video data having a transmission rate of 9Mbps at a maximum and audio data having a transmission rate of 6Mbps at a maximum, respectively, it is difficult to provide high audio quality in a multi-channel reproduction.

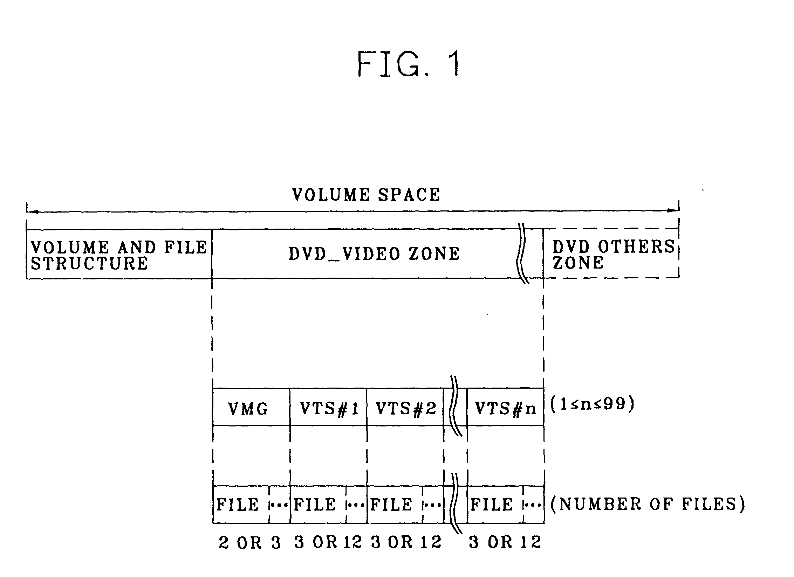

Figure 1 shows a logical data structure of a digital versatile disc (DVD), wherein the logical data structure of the DVD-video is expressed as a structure of volume space, including a volume and file structure, a single DVD-video zone and DVD-others zone. The DVD-video zone where video-related data is positioned includes a volume manager (VMG), video title sets (VTSs), and video object sets (VOBSs). The DVD-video zone can have a VMG and VTSs from a minimum of 1 to a maximum of 99. The VMG is positioned at the front of the DVD-video zone and includes 2 or 3 files, and the VTSs include files of a minimum of 3 through a maximum of 12.

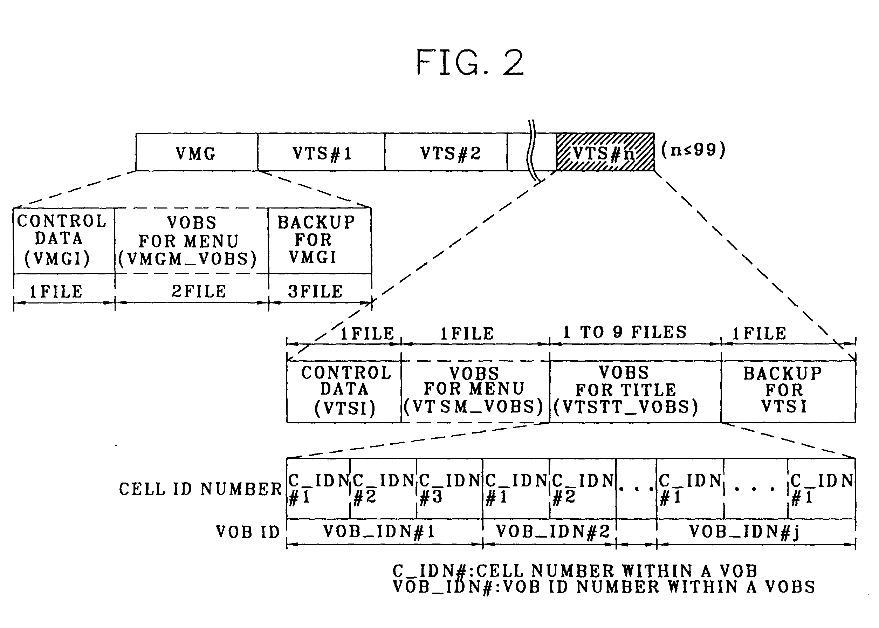

Figure 2 shows the structure of the VMG and the VTS, the VMG includes a VMGI (video manager information) which is control data occupying a file, a video manager menu of the VOBS (VMGM-VOBS) occupying two files, and a VMGI backup occupying three files. All VOBs have the form of contiguous blocks, and each VOB includes data such as video, SUB-picture and audio. Each VTS includes a VTSI which includes control data, a video title set menu of VOBs (VTSM_VOBS), a video title set title of VOBs (VTSTT VOBS), and a backup for the VTSI. Also, the VTSTT_VOBS includes a number of cells (C_IDNs). The VOB_IDN# shown in Figure 2 represents a VOB ID number in the VOB and the C_IDN# represents a cell ID number in each VOB.

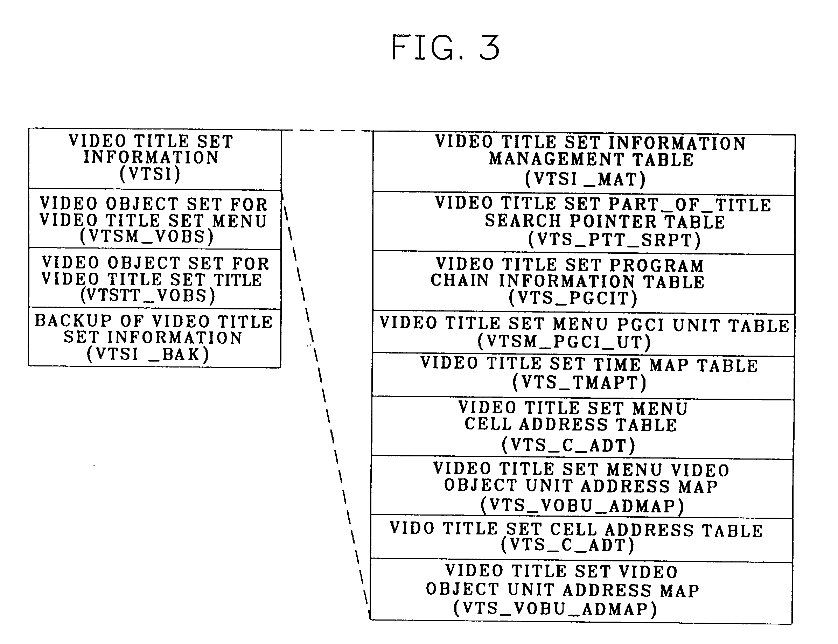

Figure 3 is a view showing the structure of video title set information (VTSI) positioned in front of each VTS. The VTS includes one or more video titles and video title set menus (VTSM). The VTSI includes manager information for titles, in which the title manager information includes information for searching a part of title (PTT), information for reproducing the VOBs, the VTSM information, and VOBs attribute information. The VTSI starts with a VTSI_MAT (video title set information management table) as shown in Figure 3, which is followed by a VTS_PTT_SRPT (video title set PTT search pointer table), a VTS_PGCIT (video title set program chain information table), a VTSM_PGC_UT (video title set menu PGCI unit table), a VTS_TMAPT (video title set time map table), a VTSM_C_ADT (video title set cell address table), a VTSM_VOBU_ADMAT (video title set menu video object unit address map), a VTS_C_ADT (video title set cell address table), and a VTS_VOBU_ADMAP (video title set video object unit address map).

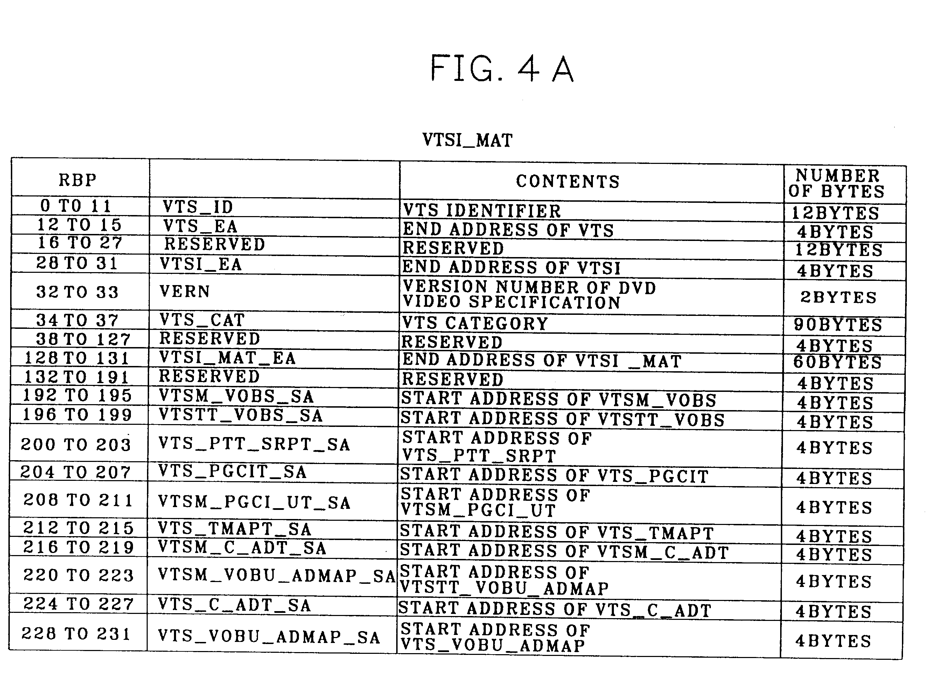

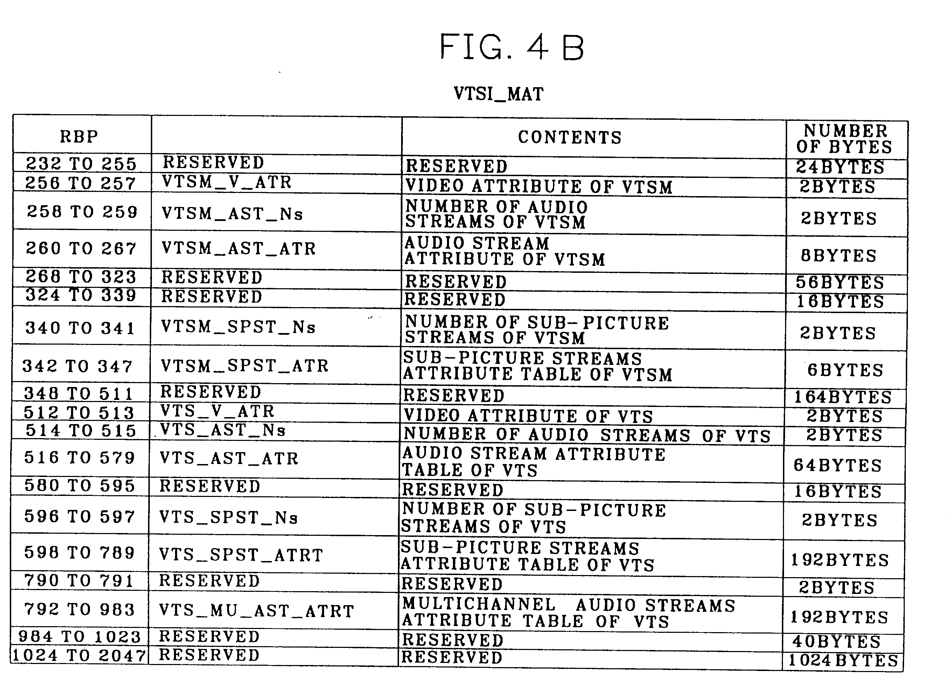

Figures 4A and 4B are views showing the structure of a video title set information management table (VTSI_MAT) of the DVD-video. The VTSI_MAT contains the VTSI-related information and a start address of the VOBS attribute in the VTS. In the VTSI_MAT as shown in Figure 4B, a VTS_AST _ATRT (audio stream attribute table of VTS) in RBP 516-579 contains VTS_AST_ATR #0 through #7 RBP of eight audio streams.

To solve the above problems, another format which uses methods differing from that of the DVD-video format has been proposed in order to improve an audio quality. However, such a format is not compatible with the DVD-video format.

With a view to solve or reduce the above problems, it is an aim of embodiments of the present invention to provide a digital versatile disc (DVD) which can record a multi-channel, high quality audio data while maintaining compatibility with a DVD-video format.

It is another aim of embodiments of the present invention to provide a reproduction apparatus for reproducing a digital versatile disc (DVD) in which multi-channel, high quality audio data are recorded while maintaining compatibility with a DVD-video format.

According to a first aspect of the invention, there is provided a digital versatile disc (DVD) comprising at least one title, each title having a corresponding plurality of audio streams among which a particular audio stream stores basic audio data according to a DVD-video format, at least one of the remaining audio stream stores extended audio data corresponding to the basic audio data, and an audio stream attribute of a video title set stores additional data to identify the extended audio data relating to the at least one extended audio stream, wherein the basic audio data provides an audio quality according to the DVD-video format, and the extended audio data provides an improved audio quality exceeding the audio quality according to the DVD-video format.

Preferably, an audio coding mode zone to store the additional data is provided.

Each audio stream for the extended audio data preferably comprises actual audio data for enhancing the audio quality provided by the corresponding basic audio data and additional data indicative of an extended audio stream header for reproducing the actual audio data.

Preferably, each audio stream for the extended audio data comprises actual audio data for increasing the number of quantization bits expressed by the corresponding basic audio data and additional data indicative of a usage field of the extended audio stream header.

Each audio stream for the extended audio data may comprise actual audio data for further broadening a frequency band provided by the corresponding basic audio data and additional data indicative of a usage field of an extended audio stream header for reproducing the actual audio data.

Each audio stream for the extended audio data may comprise actual audio data for further providing a channel other than a channel provided by the corresponding basic audio data and additional data indicative of a usage field of an extended audio stream header for reproducing the actual audio data.

Each audio stream for the extended audio data may comprise an extended audio stream header, and actual audio data for providing the audio quality exceeding the audio quality according to the DVD-video format, wherein the extended audio stream header comprises a number of channels, a sampling frequency of the actual audio data and a plurality of channel headers, and each channel header may comprise a channel number, a coding mode, a usage, a quantization bit number and a sampling frequency.

The actual audio data preferably comprises a plurality of channel numbers, a data length corresponding to each of a plurality of channel numbers, and audio data as long as the designated length.

Each audio stream for the extended audio data may comprise an extended audio stream header and frames containing the extended audio data, wherein the extended audio stream header comprises zones for storing data relating to an audio coding mode of the extended audio data, a sampling frequency, a quantization bit number, and a usage, and wherein the zone for storing data relating to the usage comprises zones representing a bit extension, a band extension and a channel extension of the extended audio data.

The extended audio data and the data other than the corresponding additional data is preferably stored according to the DVD-video format.

According to a second aspect of the invention, there is provided a digital versatile disc (DVD) reproduction apparatus to reproduce recorded data from a DVD having at least one title, each title having a corresponding plurality of audio streams among which a particular audio stream stores basic audio data according to a DVD-video format, at least one of the remaining audio streams stores extended audio data corresponding to the basic audio data, and an audio stream attribute of a video title set stores additional data to identify the extended audio data relating to the at least one extended audio stream, said DVD reproduction apparatus comprising: reading means for reading the recorded data of one of the titles from the DVD; syntax parsing means for syntax-parsing the data read by the reading means and outputting the basic audio stream of the one title and the corresponding at lease one extended audio stream; and audio decoding means for receiving and processing the basic audio stream containing basic audio data and each of the at least one extended audio stream containing extended audio data from the syntax parsing means, and outputting an audio signal having an improved audio quality using the extended audio data provided with the basic audio data.

Preferably, said syntax parsing means detects the additional data stored in the audio stream attribute of the video title set, and discriminates the basic audio data and the extended audio data based on the detected additional data.

Said syntax parsing means may judge that the at least one extended audio stream following the basic audio stream relates to the basic audio stream, and simultaneously supply both the basic audio stream and the corresponding at least one extended audio stream to said audio decoding means.

Said syntax parsing means may judge the at least one extended audio stream following the basic audio stream as relating to the basic audio stream, and add information indicating that the basic audio stream and the extended audio stream are involved with each other to the basic audio stream and the corresponding at least one extended audio stream and simultaneously supply both the basic audio stream and the corresponding at least one extended audio stream to said audio decoding means.

Said audio decoding means preferably comprises: a basic audio decoder to decode the basic audio stream received from said syntax parsing means, to generate a decoded basic audio signal; an extended audio decoder to decode the at least one extended audio stream received from said syntax parsing means, to generate a decoded extended audio signal; and an audio quality enhancer to combine the decoded basic audio signal and the decoded extended audio signal, to generate a digital audio signal having the improved audio quality higher than the decoded basic audio signal according to the DVD-video format.

Preferably, each of the at least one extended audio stream stored in the DVD comprises an extended audio stream header and actual audio data providing the improved audio quality higher than the audio quality according to the DVD-video format, wherein the extended audio stream header comprises a number of channels, a sampling frequency of the actual audio data and a plurality of channel headers, wherein each channel header comprises a channel number, a coding mode, a usage, a quantization bit number and a sampling frequency relating to providing the improved audio quality.

The actual audio data may comprise a plurality of channel numbers, a data length corresponding to each of a plurality of channel numbers, and audio data.

Each of the at least one extended audio stream stored in the DVD preferably comprises an extended audio stream header and frames containing the extended audio data, wherein the extended audio stream header comprises zones for storing data relating to an audio coding mode of the extended audio data, a sampling frequency, a quantization bit number, and a usage, and wherein the zone for storing data relating to the usage comprises zones representing a bit extension, a band extension and a channel extension of the extended audio data.

According to a third aspect of the invention, there is provided a DVD audio disc comprising a video title set having at least one title, each title having a corresponding plurality of audio streams, wherein a first one of the plurality of audio streams stores basic audio data according to a DVD video format, and at least one of the remaining audio streams stores extended audio data corresponding to the basic audio data, wherein the basic audio data provides an audio quality according to the DVD video format, and the extended audio data is combinable with the basic audio data to provide an improved quality exceeding that of the basic audio data.

The extended audio data preferably has quantization bits in addition to those of the corresponding basic audio data.

Preferably, extended audio data are used as lower bits and the corresponding basic audio data are used as higher bits.

The extended audio data may provide for an increase in bandwidth of the basic audio data.

The basic audio data preferably has a basic sampling frequency and the extended audio data has a high sampling frequency.

The extended audio data may be recorded on the DVD audio disc over an entire band of the basic audio data.

The extended audio data may provide an additional channel, in addition to that provided by the basic audio data.

Each of the plurality of audio streams preferably has a video title set management table with an audio mode area indicating whether the audio stream is the basic audio stream or one of the at least one extended audio streams.

Preferably, each of the at least one extended audio streams is sequentially concatenated with the basic audio data of the basic audio stream.

According to a fourth aspect of the invention, there is provided a DVD audio disc, comprising: a video title set having a plurality of audio streams, in which a first one of the plurality of audio streams is a basic audio stream and at least one of the remaining audio streams is an extended audio stream, each audio stream having an audio data mode indicator indicative of the basic audio stream or the extended audio stream; and the basic audio stream storing basic audio data; and each extended audio stream including an extended audio stream header and frames of extended audio data, the extended audio stream header including a usage area for storing the audio data mode indicator, a sampling frequency, a quantization bit number, and usage data of the extended audio data, and the usage area of the extended audio data indicating bit extension, bandwidth extension, or channel extension of the extended audio data; wherein the at least one extended audio stream is combinable with the basic audio stream to be reproduced as audio data.

According to a fifth aspect of the invention, there is provided a device for reproducing a DVD audio disc which has a video title set having a plurality of audio streams, in which a first one of the plurality of audio streams is a basic audio stream and at least one of the remaining audio streams is an extended audio stream, each audio stream having an audio data mode indicator indicative of the basic audio stream or the extended audio stream, the basic audio stream storing basic audio data, each extended audio stream including an extended audio stream header and frames of extended audio data, the extended audio stream header including a usage area for storing the audio data mode indicator, a sampling frequency, a quantization bit number, and usage data of the extended audio data, and the usage area of the extended audio data indicating bit extension, bandwidth extension, or channel extension of the extended audio data, wherein the at least one extended audio stream is combinable with the basic audio stream to be reproduced as audio data, said device comprising: a basic audio decoder; an extended audio decoder; and an audio quality enhancer; wherein said basic audio decoder reproduces the basic audio data of said basic audio stream, said extended audio decoder reproduces the extended audio data and said audio quality enhancer combines the extended audio data with said basic audio data, and performs bit extension, bandwidth extension, or channel extension of the combined basic audio data and extended audio data, to generate output audio data.

Said audio quality enhancer preferably comprises: a bit extender to arrange said basic audio data at upper bits and the extended audio data at lower bits, to extend a bit number of said output audio data; a bandwidth extender to oversample the basic audio data, making the oversampled data having a sampling frequency equal to that of said extended audio data and adding said oversampled basic audio data to said extended audio data, to extend a bandwidth of said output audio data; and a channel extender for intactly outputting channels of the basic audio data and channels of the extended audio data, to extend a number of the channels of said output audio data.

Said audio quality enhancer preferably comprises: a bit extender to arrange said basic audio data at upper bits and the extended audio data at lower bits, to extend a bit number of said output audio data; a bandwidth extender having a perfect reconstruction FIR filter to combine the extended audio data with the basic audio data, to extend a bandwidth of said output audio data; and a channel extender for intactly outputting channels of the basic audio data and channels of the extended audio data, to extend a number of the channels of said output audio data.

According to a sixth aspect of the invention, there is provided a device for commonly reproducing data from a DVD audio disc and a DVD video disc, wherein the DVD audio disc which has a video title set having a plurality of audio streams, in which a first one of the plurality of audio streams is a basic audio stream and at least one of the remaining audio streams is an extended audio stream, each audio stream having an audio data mode indicator indicative of the basic audio stream or the extended audio stream, the basic audio stream storing basic audio data, each extended audio stream including an extended audio stream header and frames of extended audio data, the extended audio stream header including a usage area for storing the audio data mode indicator, a sampling frequency, a quantization bit number, and usage data of the extended audio data, and the usage area of the extended audio data indicating bit extension, bandwidth extension, or channel extension of the extended audio data, wherein the at least one extended audio stream is combinable with the basic audio stream to be reproduced as audio data, and DVD video disc as the basic audio stream, a video stream and a sub-picture stream, said device comprising: a video decoder; a sub-picture decoder; a basic audio decoder; an extended audio decoder; and an audio quality enhancer; wherein when said device is to reproduce the data from the DVD audio disc, said basic audio decoder reproduces the basic audio data of said basic audio stream, said extended audio decoder reproduces said extended audio data of the at least one extended audio stream, and said audio quality enhancer combines said extended audio data with said basic audio data, to perform bit extension, bandwidth extension, or channel extension of said combined basic audio data and extended audio data, to generate output audio data; and wherein when said device is to reproduce the data from the DVD video disc, said basic audio decoder reproduces the basic audio data of said basic audio stream, said video decoder reproduces said video stream, and said sub-picture decoder reproduces said sub-picture stream.

Preferably, said audio quality enhancer comprises: a bit extender to arrange said basic audio data at upper bits and the extended audio data at lower bits, to extend a bit number of said output audio data; a bandwidth extender to oversample the basic audio data, making the oversampled data equal to the sampling frequency of said extended audio data and adding said oversampled basic audio data to said extended audio data, to extend a bandwidth of said output audio data; and a channel extender for intactly outputting channels of the basic audio data and channel of the extended audio data, to extend a number of the channels of said output audio data.

Said audio quality enhancer may comprise: a bit extender to arrange said basic audio data at upper bits and the extended audio data at lower bits, to extend a bit number of said output audio data; a bandwidth extender having a perfect reconstruction FIR filter to combine the extended audio data with the basic audio data, to extend a bandwidth of said output audio data; and a channel extender for intactly outputting channels of the basic audio data and channels of the extended audio data, to extend a number of the channels of said output audio data. The device may further comprise: a pickup unit to read data from the DVD audio or video disc; a servo and RF/ECC unit to perform servo functions and error correct the read data; and a system parser to syntax-parse the error corrected data into the basic audio stream and the at least one extended audio stream if the DVD audio disc is to be reproduced, and to syntax-parse the error corrected data into the basic audio stream, the video stream and the sub-picture stream if the DVD video disc is to be reproduced.

The device of the sixth aspect wherein: said basic audio decoder includes an LPCM decoder, an AC-3 decoder, and an MPEG decoder; and said extended audio decoder includes an LPCM decoder, a pseudo-lossless coding decoder, a bitstream decoder, and a lossless coding decoder.

Preferably, said basic audio decoder further includes: a DTS decoder; and an SDDS decoder.

According to a seventh aspect of the invention, there is provided a method of reproducing data from a DVD audio disc which records basic audio data in a basic audio stream according to a DVD video format, and extended audio data in at least one extended audio stream, each audio stream having a mode indicator indicative of whether the audio stream is the basic audio stream or the extended audio stream and a coding indicator indicative of a coding method of the audio stream, the method comprising the steps of: (a) determining whether each audio stream is the basic audio stream or the extended audio stream; (b) decoding the basic audio stream according to the corresponding coding method; (c) decoding the at least one extended audio streams according to the corresponding coding methods; and (d) combining the basic audio stream with the at least one extended audio streams.

Said step (d) preferably comprises the steps of: (dl) combining the basic audio stream with an adjacent one of the at least one extended audio streams, to generate a combined audio stream; (d2) recombining the combined audio stream with a next one of the at least one extended audio streams; and (d3) repeatedly performing said step (d2) until all of the at least one extended audio streams have been combined with the basic audio stream.

Said step (d) may comprise the steps of: (d1) determining whether the each extended audio stream has an extended bit and concatenating the basic audio stream with the each extended audio stream if the each extended audio stream has the extended bit; (d2) determining whether the each extended audio stream is a band extension type, and extending a bandwidth of the basic audio stream if the each extended audio stream is the band extension type; and (d3) determining whether the each extended audio stream is a channel extension type, and extending a channel of the basic audio stream if the each extended audio stream is the channel extension type.

Said step (d2) may comprise the steps of: determining a type of the band extension; oversampling the basic audio stream with a sampling rate of the each extended audio stream if the bandwidth extension type is oversampling/addition; and performing a perfect-reconstruction-FIR filtering with respect to the basic audio stream and the each extended audio stream if the bandwidth extension is a 2-band type.

According to an eighth aspect of the invention, there is provided a DVD audio disc to store audio data, comprising; a plurality of audio streams wherein a first one of the plurality of audio streams stores basic audio data, and at least one of the remaining audio streams stores extended audio data corresponding to the basic audio data, to provide an improved audio quality over that of the basic audio data.

For a better understanding of the invention, and to show how embodiments of the same may be carried into effect, reference will now be made, by way of example, to the accompanying diagrammatic drawings, in which:
Figure 1 is a view showing a volume structure of a digital versatile disc (DVD);
Figure 2 is a view showing the structure of a volume manager (VMG) and a video title set (VTS) shown in figure 1;
Figure 3 is a view showing the structure of video title set information (VTSI) shown in Figure 2;
Figure 4A and 4B are views showing the structure of a video title set information management table (VTSI_MAT) shown in Figure 3;
Figure 5 is a view showing the structure of a VTS audio stream attribute (VTS_AST_ATR) according to an embodiment of the present invention;
Figure 6 is a view showing the structure of a directory and the contents of the VTSI in the DVD when an audio title includes data of a basic audio zone and an extended audio zone according to an embodiment of the present invention;
Figure 7 is a view showing the structure of an extended audio stream for recording the extended audio data according to the embodiment of the present invention;
Figure 8 is a view showing an example of a physical data structure of the extended audio stream according to the embodiment of the present invention;
Figure 9 is a block diagram of a DVD reproduction apparatus according to the embodiment of the present invention;
Figure 10 is a flow-chart diagram for explaining the signal processing of an audio decoder shown in Figure 9;
Figure 11 is a detailed block diagram of the audio decoder shown in Figure 9;
Figures 12 through 14B are views for explaining units which are positioned in the audio decoder shown in Figure 9, combining basic audio data and extended audio data to improve an audio quality;

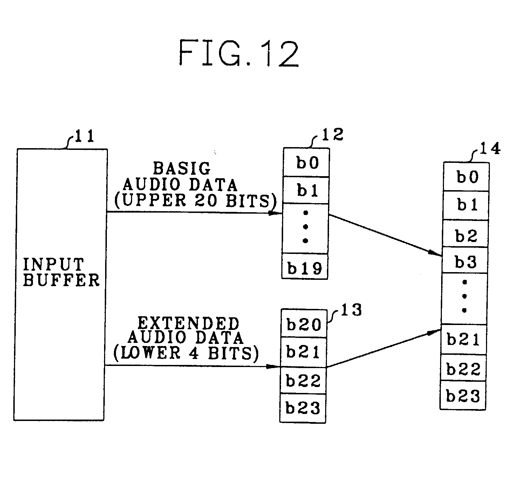

Figure 12 is a view showing a unit increasing the number of bits;

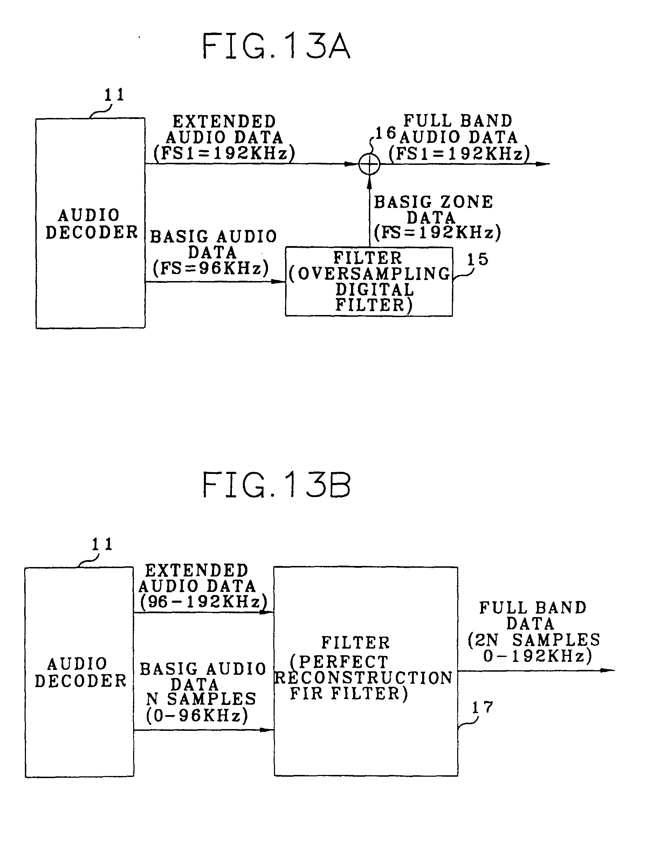

Figure 13A is a view showing a unit extending an audio band via addition of oversampled basic audio data and extended audio data;
Figure 13B is a view showing a unit extending an audio band via a perfect-reconstruction-FIR-filtering of the lower band basic audio data and the higher band extended audio data which are audio data expressed as 2-band; and

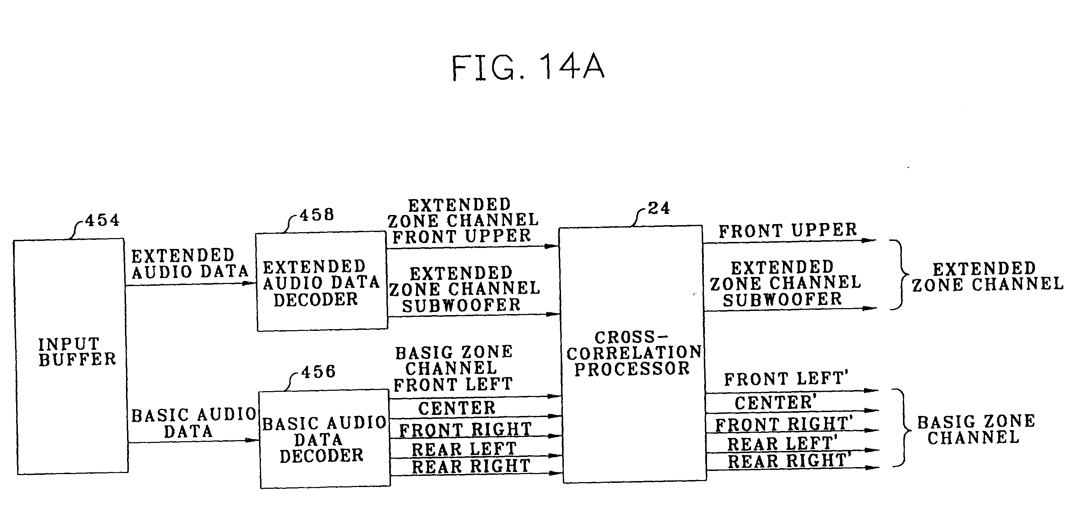

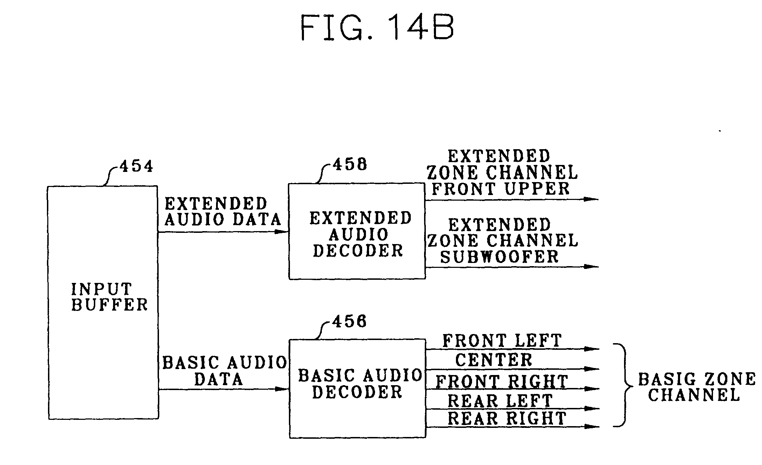

Figure 14A and 14B are views showing units for decoding the basic audio data and the extended audio data for an effect channel;
Figure 14A is a view showing a unit for separating original audio signals using a cross-correlation between the basic audio data and the extended audio data, and Figure 14B is a view showing a unit for simultaneously reproducing audio data of the basic audio channel and the extended audio channel.

Reference will now be made in detail to the present preferred embodiments of the present invention, examples of which are illustrated in the accompanying drawings, wherein like reference numerals refer to the like elements throughout. The embodiments are described below in order to explain the present invention by referring to the Figures.

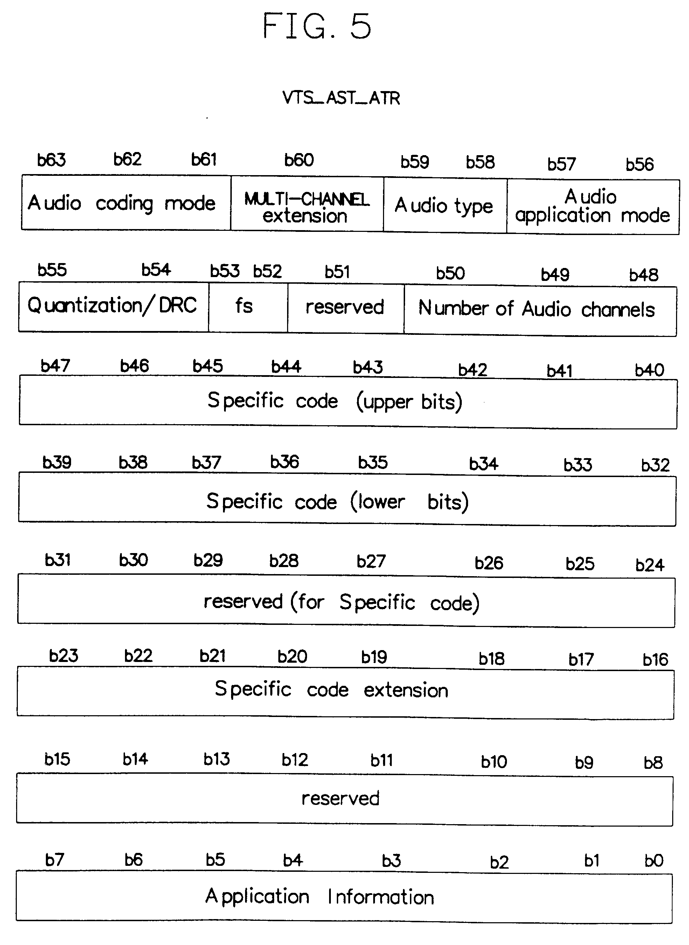

As described above, Figures 4A and 4B are views showing the structure of a video title set information management table (VTSI_MAT) of the DVD-video. The VTSI MAT contains the VTSI-related information and a start address of the VOBS attribute in the VTS. In the VTSI_MAT as shown in Figure 4B, a VTS_AST_ATRT (audio stream attribute table of VTS) in RBP 516-579 contains VTS_AST ATR #0 through #7 RBP of eight audio streams. Each VTS AST_ATR includes eight bytes as shown in Figure 5, and a value of each field becomes internal information of the audio stream of the VTSTT_VOBS. Referring to Figure 5, according to the structure of the VTS_AST_ATR, information relating to an audio coding mode recorded in b63 through b61 as follows in Table 1.

Information about a multi-channel extension is recorded in the b60 zone. Here, recording of 0b means that a multi-channel extension function is not selected, and recording of 1b means that a multi-channel extension function is performed according to the information of the VTS_MU_AST_ATRT recorded in the RBP 792-983 of the VTSI MAT of Figure 4B.

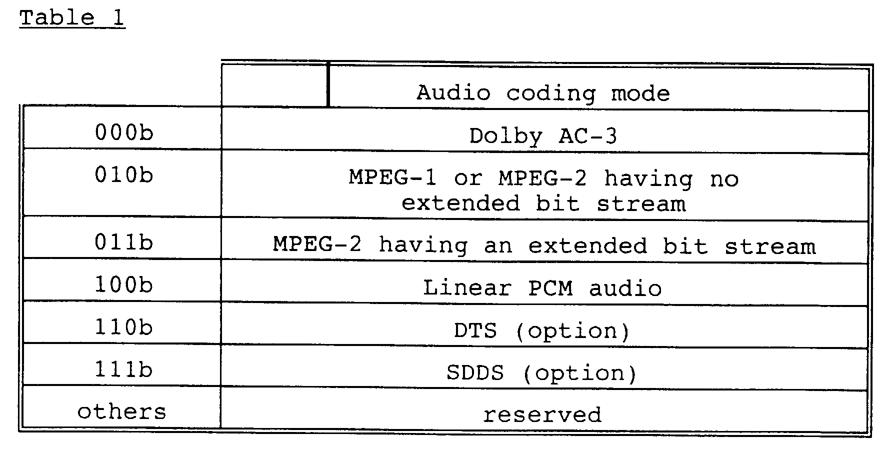

An audio type of b59 through b58 is as follows in Table 2.

**Table 2**

| | |
|---|---|
| b59-b58 | Audio type |
| 00b | Not specified |
| 01b | Language included |
| others | Reserved |

Information about an audio application mode recorded in b57∼b56 follows in Table 3.

**Table 3**

| | |
|---|---|
| b57-b56 | Audio application mode |
| 00b | Not specified |
| 01b | Karaoke mode |
| 10b | Surround |
| 11b | Reserved |

Information about a quantization/DRC is recorded in b55-b54. If an audio coding mode is "000b," data of "11b" is recorded. If the audio coding mode is "010b" or "011b," quantization information is defined as follows.
00b: dynamic range control data does not exist in an MPEG audio stream.
01b: dynamic range control data exists in an MPEG audio stream.
10b: a reserved zone.
11b: a reserved zone.

If an audio coding mode is 100b, quantization information is stored as in the following Table 4.

**Table 4**

| | |
|---|---|
| b55-b54 | Quantization/DRC |
| 00b | 16 bits |
| 01b | 20 bits |
| 10b | 24 bits |
| 11b | Reserved |

b53-b52 represent a sampling frequency fs as follows in Table 5.

**Table 5**

| | |
|---|---|
| b53-b52 | fs |
| 00b | 48KHz |
| 01b | 96KHz |
| 10b | Reserved |
| 11b | Reserved |

b50-b48 representing the number of audio channels is as follows in Table 6.

In the VTSI_MAT of Figures 4A and 4B, VTS_MU_ATRT (multi-channel audio stream attribute table of VTS) of RBP 792-983 stores VTS_MU_AST_ATR #0-#7 RBPs of eight audio streams. Also, each VTS_MU_AST_ATR includes an 8-byte VTS MU_AST_ATR(1) and a 16-byte VTS_MU_AST_ATR(2).

**Table 6**

| | |
|---|---|
| b50-b48 | Audio channel number |
| 000b | 1ch (mono) |
| 001b | 2ch (stereo) |
| 010b | 3ch (multi-channel) |
| 011b | 4ch (multi-channel) |
| 100b | 5ch (multi-channel) |
| 101b | 6ch (multi-channel) |
| 110b | 7ch (multi-channel) |
| 111b | 8ch (multi-channel) |
| Others | Reserved |

In a DVD-video zone having the above format, a video area, a sub-picture area and an audio area of a video title set record corresponding data. In this case, excellent quality audio data necessary for a multi-channel and high sampling frequency cannot be recorded.

Thus, there is proposed a digital versatile disc (DVD) storing, in a plurality of audio stream areas used for serving a multi-language according to a DVD-video format, "extended audio data" for improving an audio quality provided by basic audio data of the DVD-video format.

In the DVD according to an embodiment of the present invention, the basic audio data having an audio quality provided by the DVD-video format is recorded in a particular audio stream of the DVD-video title set. Extended audio data which is added to the basic audio data for realizing a high quality audio, is recorded in one or more audio streams following the particular audio stream.

The same method as the DVD-video format is used as a method for recording the entire audio stream according to the present invention in a DVD. The above-described basic audio data is recorded using a method such as LPCM. AC-3, MPEG-2, DTS, and SDDS defined in the DVD-video format. The extended audio data is recorded by various recording methods, which should be a method for providing a high quality audio similar to the LPCM. At present, the LPCM method of 24-bit performance and the DTS method are known as proper methods for recording audio signals in a DVD. The extended audio data can be encoded using other coding methods which can provide an audio quality similar to the LPCM, in addition to the method used by the DVD-video format such as LPCM and DTS.

For clarity of explanation, an audio stream containing extended audio data is defined as an extended audio stream, and an audio stream containing the basic audio data is defined as a basic audio stream. The extended audio data can be separately recorded in one or more extended audio streams. Such extended audio data is added to the audio signal recorded in a storage zone of the basic audio stream, to thereby provide an improved audio quality in comparison with the DVD-video format. For providing the improved audio quality, the extended audio data enables the basic audio data to increase the number of quantization bits, to increase the bandwidth thereof, or to provide an extended channel which is not contained in the basic audio data.

The contents of the extended audio data can be divided as follows. When the number of quantization bits increases, the extended audio data is used for audio information of lower bits which cannot be recorded since only 24 bits or less are recorded due to the limit of a bit rate of the basic audio data according to the DVD-video format. When a bandwidth is extended, only an extended band which is not included in a basic band expressed by the basic audio data is recorded with a high sampling frequency, a high-band component is recorded using a method such as a two-band expression using a particular filter, for example, a perfect-reconstruction-FIT-filter, or an audio signal of a channel which is not expressed by the basic audio data is recorded over the entire band.

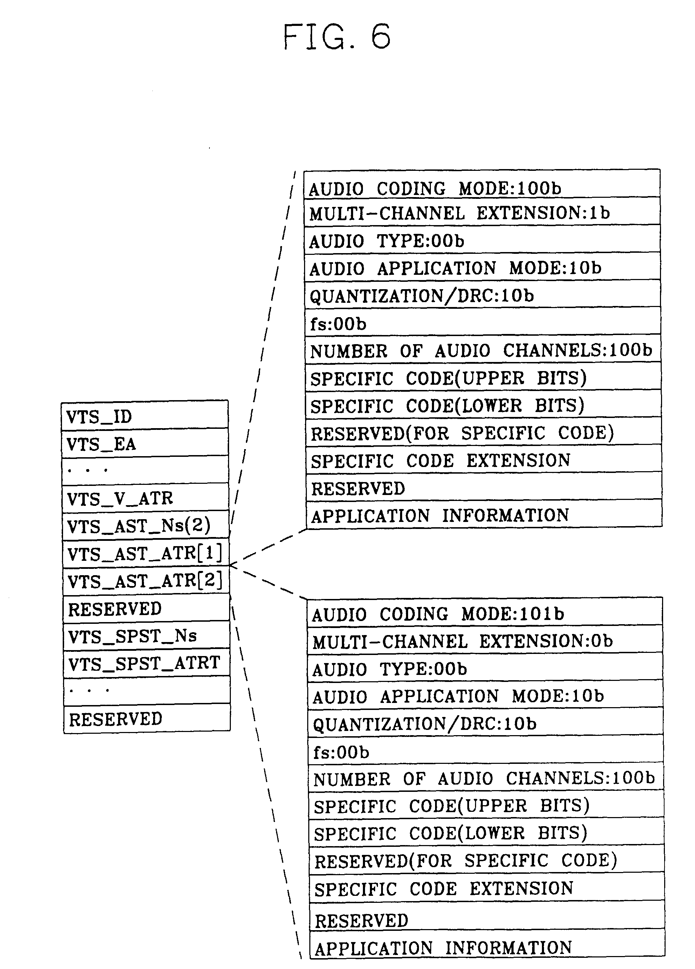

Figure 6 is a view showing the contents of the VTSI MAT when the basic audio data and the extended audio data are recorded to provide an audio title having an improved audio quality in comparison with the DVD-video format according to an embodiment of the present invention. When an audio stream #1 stores basic audio data and an audio stream #2 stores extended audio data corresponding to the basic audio data, a VTS_AST_Ns contains the number of audio streams of "2" and VTS_AST_ATR[1] and VTS_AST_ATR[2] contain information about the attribute of each audio stream. The VTSI_MAT including such information is positioned in the VTSI shown in Figure 3.

Table 7 shows an audio coding mode which is modified from an audio coding mode according to the DVD-video format for use in the present invention. A new value is added in the modified audio coding mode "b63-b61" to express an extended audio stream and the other values are the same as the DVD-video format. Therefore, when extended audio data is recorded in an audio stream #2, "101b" is recorded in an audio coding mode of the VTS_AST ATR shown in Figure 5.

**Table 7**

| | |
|---|---|
| b63-b61 | Modified audio coding mode |
| 000b | Dolby AC-3 |
| 010b | MPEG-1 or MPEG-2 having no extended bit stream |
| 011b | MPEG-2 having an extended bit stream |
| 100b | Linear PCM audio |
| 101b | Extended audio stream |
| 110b | DTS (option) |
| 111b | SDDS (option) |
| Others | Reserved |

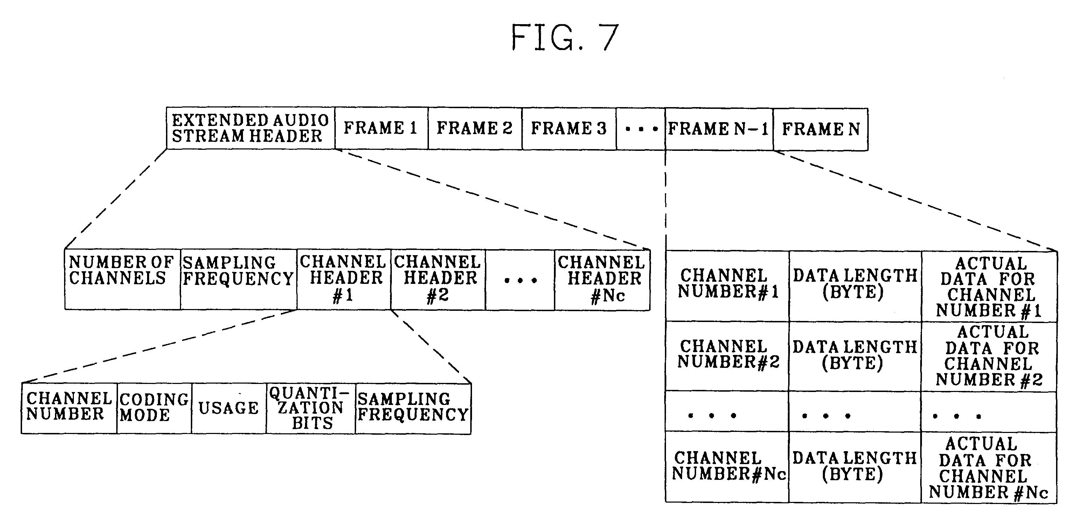

Figure 7 shows the structure of an extended audio stream according to the embodiment of the present invention. The extended audio stream shown in Figure 7 includes an extended audio stream header and frames containing actual audio data. The extended audio stream shown in Figure 7 includes an extended audio stream header and N frames. The extended audio stream header includes information indicating the number of channels, the sampling frequency of the extended audio stream header, and channel headers corresponding to the number of channels. Each channel header includes information such as a channel number of the corresponding channel, a coding mode, a usage zone, quantization bits and a sampling frequency of that channel. Each channel number uses 4 bits which can represent 16 channels of "0000b through 1111b" at maximum. The coding mode shown in Figure 7 contains coding mode information using 4 bits for extended audio data. In the embodiment of the present invention, coding modes as shown in Table 8 can be used.

**Table 8**

| | Extended audio coding mode |
|---|---|
| 0000 | LPCM |
| 0001 | DTS |
| 0010 | Bit stream coding |
| 0011 | Lossless coding |
| 0100 | ADPCM |
| 0101 | 8-bit fs |
| Others | Reserved |

The value of the usage zone contained in the extended audio channel header uses 3 bits. When the extended audio data is used, the value represents the usage of the extended audio data recorded in the frame of a corresponding channel. When the value of the usage is "000", the extended audio data represents extension of bits of the basic audio data. When the value of the usage is "001", the value represents the data for band extension in the form that sampling frequencies of the extended audio data and the basic audio data differ. When the value of the usage is "010", the value represents the data for band extension in the form that sampling frequencies of the extended audio data and the basic audio data are the same. When the value of the usage is "011", the value represents that the extended audio data is channel extension of the basic audio data and requires a cross-correlation processing of a basic audio channel for reproduction. When the value of the usage is "100", the value represents that the basic audio channel and the extended audio channel are simply added for reproduction. The above values of the usage are shown in Table 9.

**Table 9**

| | |
|---|---|
| | Usage |
| 000b | Bit extension |
| 001b | Simple bandwidth extension |
| 010b | Frequency-shifted bandwidth extension |
| 011b | Channel extension using cross-correlation |
| 100b | Simple channel extension |
| Others | Reserved |

The quantization bits in the channel header of the extended audio stream are composed of 5 bits, whose meaning is shown in Table 10.

**Table 10**

| | |
|---|---|
| | Quantization bits |
| 00000 | Meaningless, used when data compression coding is used |
| 00001-01000 | 1-bit to 8-bit |
| 10000-11000 | 16-bit to 24-bit |
| Others | Reserved |

A sampling frequency of the extended audio channel header is expressed as 3 bits, whose meaning is shown in Table 11.

**Table 11**

| | |
|---|---|
| | Sampling frequency |
| 000 | 48KHz |
| 001 | 96KHz |
| 010 | 192KHz |
| 011 | 384KHz (8fs) |
| 100 | 3.072MHz (64fs) |
| Others | Reserved |

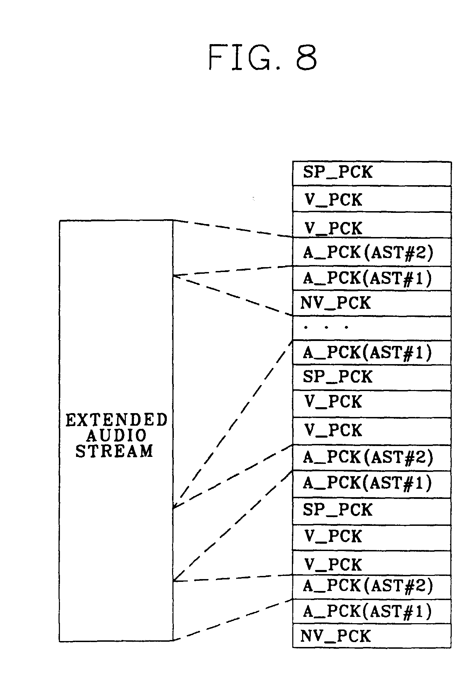

Figure 8 is a view showing an example of a physical data structure of the extended audio stream in which the extended audio data is stored, which shows a case when the extended audio data is recorded in an audio stream #2. The extended audio data can be recorded in two or more audio streams differently from the Figure 8 case. Also, two or more basic audio streams can exist. In this case, all audio streams having an audio stream number between the two audio streams A and B storing the basic audio data are used as extended audio streams relating to the basic audio stream A. For example, if there are five audio streams, and #1 and #4 are basic audio streams and #2, #3 and #5 are extended audio streams, the #2 and #3 extended audio streams depend upon the #1 basic audio stream, and the #5 audio stream depends upon the #4 basic audio stream. Therefore, to obtain extended audio data corresponding to the basic audio data, the extended audio streams corresponding to the basic audio stream are made in the form that the data of each extended audio stream is sequentially concatenated with the data of the basic audio stream. The audio data in a particular frame is divided and stored by channel, and the stream header records the entire information, and information such as a coding method by each channel and usage therein. A case where the extended audio data is recorded according to the format shown in Figure 6 will be described below. When band-extended and DTS-compressed data having a frequency of 48KHz through 96KHz, 24 bits and a transmission rate of 720Kbps is added to the LPCM data having five channels of a basic zone, a frequency of 48KHz, 24 bits and a transmission rate of 5.575Mbps, a value of each channel header is recorded as shown in Table 12.

**Table 12**

| | | | | | |
|---|---|---|---|---|---|
| Channel number | Coding mode | Usage | Bit number | Sampling frequency (fs) | Remarks |
| 0000 | 0001 | 010 | 00000 | 000 | note 1 |
| 0001 | 0001 | 010 | 00000 | 000 | note 2 |
| 0010 | 0001 | 010 | 00000 | 000 | note 3 |
| 0011 | 0001 | 010 | 00000 | 000 | note 4 |
| 0100 | 0001 | 010 | 00000 | 000 | note 5 |

In Table 12, note 1 represents a bandwidth extension of 48KHz through 96KHz of channel 0 being 48KHz DTS, note 2 represents a bandwidth extension of 48KHz through 96KHz of channel 1 being 48KHz DTS, note 3 represents a bandwidth extension of 48KHz through 96KHZ of channel 2 being 48KHz DTS, note 4 represents a bandwidth extension of 48KHz through 96KHz of channel 3 being 48KHz DTS, and note 5 represents a bandwidth extension of 48KHz through 96KHz of channel 4 being 48KHz DTS. Therefore, the multi-channel LPCM basic audio data which is expressed by a transmission rate of 5.575Mbps, five channels, 48KHz, and 24 bits, and a title formed by the extended audio data, video and sub-picture data within a transmission rate of 4.225Mbps can be recorded in a DVD.

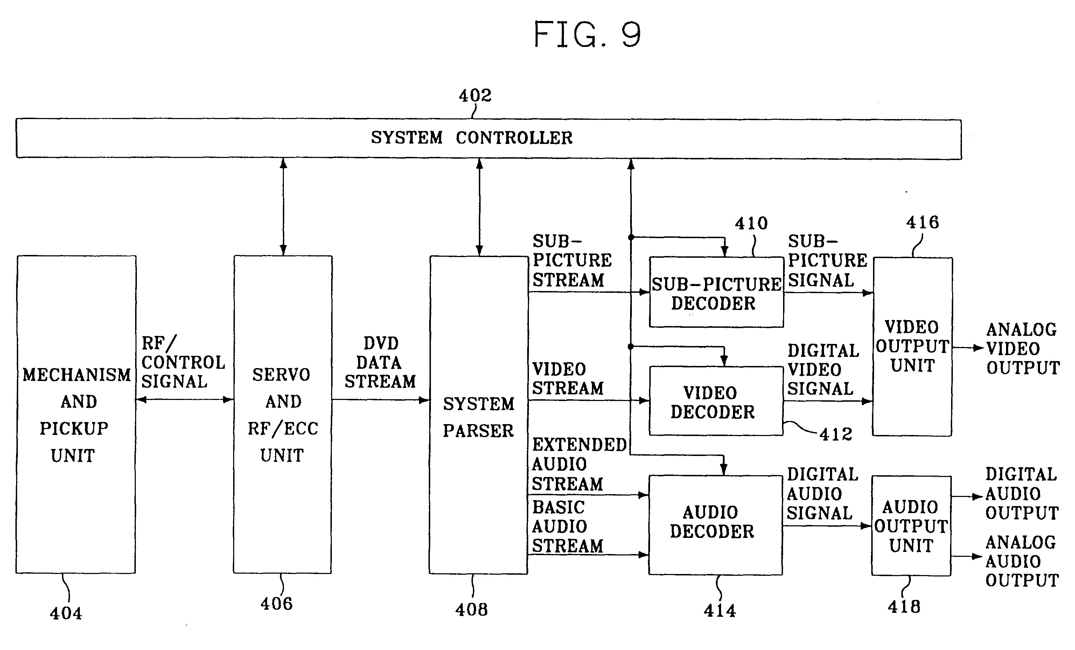

Figure 9 is a block diagram of a DVD reproduction apparatus according to the embodiment of the present invention. The reproduction apparatus can reproduce both a DVD in which data is recorded according to the DVD-video format and a DVD in which data is recorded according to a recording format proposed by the present invention. Referring to Figure 9, a system controller 402 controls the entire operation of a reproduction apparatus 400 and performs a user interface function. A mechanism and pickup portion 404 performs a function of reading the data recorded in the DVD. A servo and RF/ECC unit 406 performs various servo functions for controlling driving of the mechanism and pickup unit 404 under the control of the system controller 402, and also performs an error analysis and correction function of the data output from the mechanism and pickup unit 404. A system parser 408 also referred to as syntax parser means includes a function for discriminating and outputting an audio stream containing the extended audio data in addition to the function of the system parser of an existing DVD reproducer, and receives a DVD data stream output from the servo and RF/ECC unit 406. The system parser 408 analyzes the contents of the received DVD data stream, uses the results for outputting a sub-picture stream, a video stream, a basic audio stream and extended audio streams, and classifies additional information which is not contained in the above streams. Thus, the received DVD data stream is classified into navigation data, a video stream, a sub-picture stream, a basic audio stream, an extended audio stream, and so on. By such a classification, the sub-picture stream is supplied to a sub-picture decoder 410, and the video stream is supplied to a video decoder 412. The sub-picture decoder 410 decodes a sub-picture stream received from the system parser 408 and outputs the result to a video output unit 416. The video decoder 412 decodes the video stream received from the system parser 408 and outputs the result to the video output unit 416. The system controller 402 uses the VTSI received from the system parser 408 to control the operation of each element during reproduction of a corresponding title. The system controller 402 sets the operation mode of each element based on the coding mode information of the video stream, the sub-picture stream and the audio stream before the title is reproduced.

Meanwhile, the system parser 408 judges whether extended audio data exists based on the analysis of the VTSI of the reproduced title. The system parser 408 also uses the number of the audio stream to decide the extended audio stream(s) corresponding to a particular basic audio stream among a plurality of audio streams. The system parser 408 judges the extended audio stream(s) having the number(s) following the basic audio stream(s) as an extended audio stream involving the basic audio stream. Then, the system parser 408 supplies both the basic audio stream and the corresponding extended audio stream(s) to an audio decoder 414.

The data supply of the system parser 408 does not limit the present invention. When the reproduction apparatus as shown in Figure 9 is modified so that the basic audio stream and the extended audio stream are output to the audio decoder 414 via a single output end, the system parser 408 outputs the basic audio stream and the extended audio stream to the audio decoder 414 in sequence of the audio stream number. When at least two extended audio streams exist, synchronization is accomplished by reference of a packet time stamp (PTS) contained in the DVD data stream. The system parser 408 outputs the frames of the same time (or the same PTS) among the frames for dividing the audio streams in units of a predetermined time in sequence of the number of the audio stream to which the frames belong.

In a modification of the system parser 408, information representing that the basic audio stream and the corresponding extended audio stream are involved with each other is added to the two streams, and the added streams are supplied to the audio decoder 414. The audio decoder 414 receives the basic audio stream and the extended audio stream output from the system parser 408, decodes the basic audio data and the extended audio data based on the additional data contained in the basic and extended audio streams, combines the decoded basic audio data and the decoded extended audio data and then generates digital audio data supplied to an audio output unit 418.

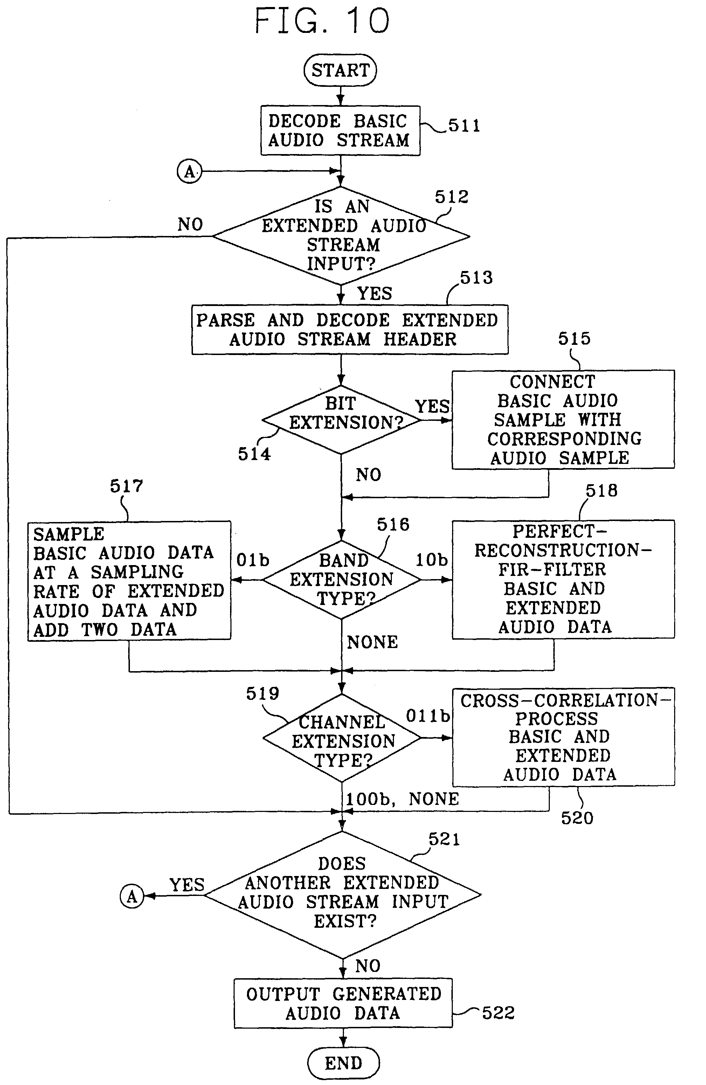

Figure 10 is a flowchart diagram for explaining the operation of the audio decoder 414 embodied by a single digital signal processor. When there exist several extended audio streams in correspondence to a single basic audio stream, a first extended audio stream is combined with the basic audio stream, and the combined result is sequentially re-combined with the next extended audio stream, to produce a final audio output. For example, if #1 and #4 audio streams among five audio streams are basic audio streams and #2, #3 and #5 audio streams are extended audio streams, and then if the #1 audio stream is selected, the #2 audio stream is combined with the #1 audio stream and the combined result is re-combined with the #3 audio stream, to reproduce the final result. Also, if the #2, #3 and #5 audio streams are selected, a reproduction operation is not performed. When the #4 audio stream is selected, the result obtained by combining #4 and #5 audio stream is reproduced since the #4-related audio stream is only one #5 audio stream.

In step 511, a decoding operation with respect to the basic audio stream input from the system parser 408 is performed. In step 512, it is judged whether extended audio stream to be processed is input. If the extended audio stream to be processed is not currently input, it is judges whether another extended audio stream is input in step 521. If another extended audio stream is input in step 521, the program returns to the step 512. If it is judged that the extended audio stream to be processed exists in step 512, the header of the input extended audio stream is analyzed and decoded in step 513. Then, it is judged whether an extended bit exists based on header analysis of the step 513 in step 514. If it is judged that the extended bit exists in step 514, concatenation of the basic audio sample and a corresponding extended audio sample is performed in step 515. Then, it is judged whether a band extension is accomplished and what type of the band extension it is in step 516. In step 516, if it is judged as a bandwidth extension using the oversampling/ addition of the basic audio data in step 516, the basic audio data is oversampled at a sampling rate of the extended audio data, and then two data are added in step 517. If it is judged as the bandwidth extension of the audio data expressed as two bands in step 516, a perfect-reconstruction-FIR filtering is performed with respect to the basic audio data and the extended audio data in step 518. If it is judged that there is no band extension in step 516, it is judged whether a channel extension is accomplished and what type of the channel extension it is in step 519. If it is judged as a channel extension using a cross-correlation processing, a cross-correlation is processed with respect to the basic audio data and the extended audio data in step 520. Then, the step 521 is performed. The signal processing of the audio decoder 414 is repetitively performed until the input extended audio stream does not exist any more in step 521. If another extended audio stream exists in step 521, the data of the basic audio stream and the data of the extended audio stream are combined, and then the combined result is re-combined with the data of a next extended audio stream in step 513. If another extended audio stream does not exist in step 521, the generated audio data is output in step 522.

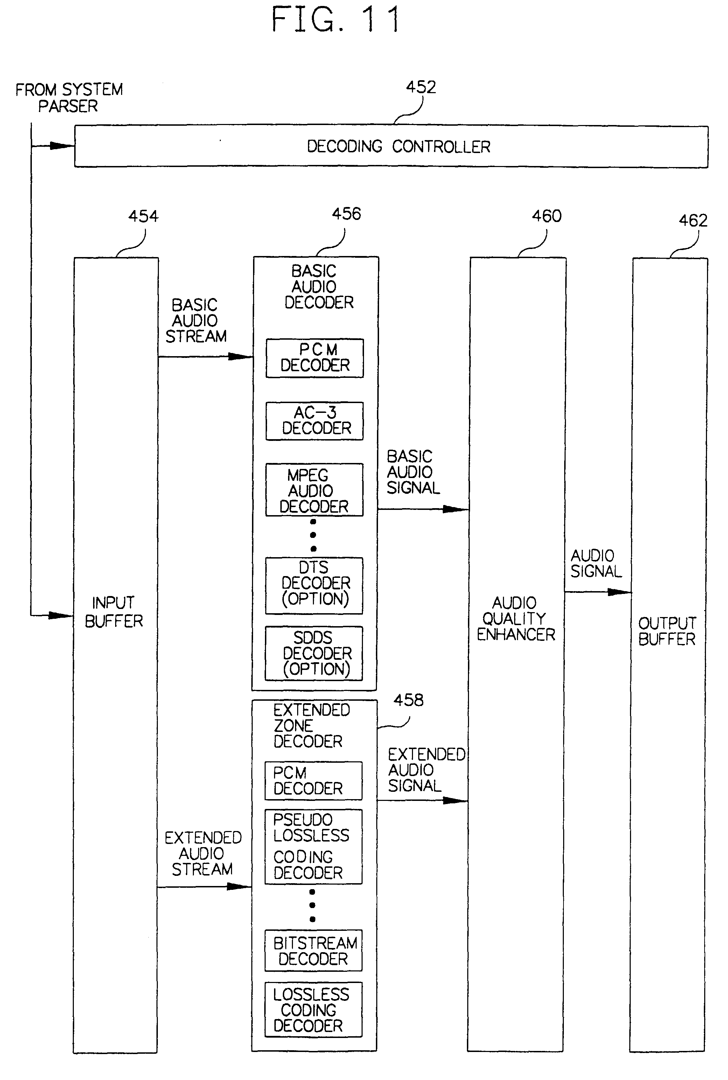

Referring to Figure 11 showing a detailed structure of the audio decoder 414 to perform the above operation, the audio decoder 414 includes a decoding controller 452 receiving the basic audio stream and the extended audio stream from the system parser 408 and an input buffer 454. The decoding controller 452 controls the entire operation of the audio decoder 414 using the additional data contained in the basic audio stream and the extended audio stream. The input buffer 454 stores the received data, and supplies the stored basic audio stream and the extended audio stream to a basic audio decoder 456 and an extended audio decoder 458, respectively, under the control of the decoding controller 452. The basic audio decoder 456 includes decoders which correspond to the audio coding modes which can be recorded in an audio stream of the DVD and the coding methods which can be used in the present invention. Therefore, the basic audio decoder 456 includes a Dolby AC-3 decoder, an MPEG-1 decoder, an MPEG-2 decoder, an LPCM decoder according to an audio coding mode of the DVD, and further includes a DTS decoder or an SDDS decoder optionally. The basic audio decoder 456 receives the basic audio stream output from the input buffer 454, and analyzes the attribute of the basic audio stream. The basic audio decoder 456 determines a decoder corresponding to the audio coding mode of the basic audio stream based on the attribute analysis, and decodes the audio data in the input basic audio stream using the determined decoder to thereby output the decoded result.

The extended audio decoder 458 includes decoders corresponding to audio coding modes which can be recorded in the extended audio stream of the DVD. Therefore, the extended audio decoder 458 can include a pseudo-lossless psychoacoustic coding decoder, a bitstream decoder and a lossless coding decoder in addition to the LPCM decoder. The extended audio decoder 458 receives the extended audio stream output from the input buffer 454, determines an audio coding mode individually corresponding to the channels of the extended audio stream based on the contents analysis of the extended audio stream header, and decodes the data of the input extended audio stream using the decoders indicated by the determined audio coding modes.

An audio quality enhancer 460 receives the basic audio data output from the basic audio decoder 456 and the extended audio data output from the extended audio decoder 458. The audio quality enhancer 460 detects a channel header contained in the received audio data, and performs a bit extension operation, a band extension operation or a channel extension operation based on the values of the usage, the quantization bit number and the sampling frequency which are contained in the detected channel header.

Figure 12 shows a bit extension unit of the audio quality enhancer 460 when the basic audio sample is expressed as 20 bits and the extended audio sample is expressed as 4 bits. Referring to Figure 12, an input buffer 11 stores the data received from the basic audio decoder 456 and the extended audio decoder 458, and outputs the basic audio samples constituting the basic audio data and extended audio samples constituting the extended audio data to sample buffers 12 and 13, respectively. In this case, the input buffer 11 outputs the basic audio sample and the corresponding extended audio sample to the sample buffers 12 and 13, respectively, one by one. The sample buffer 12 outputs the received basic audio sample in parallel, and the sample buffer 13 outputs the received extended audio sample in parallel. A combiner 14 combines the basic audio sample received from the sample buffer 12 with the extended audio sample received from the sample buffer 13, and produces an audio sample in which the bits of the basic audio sample become upper bits and those of the extended audio sample become lower bits. When the multi-channel LPCM audio data cannot be recorded in the zone of the DVD for recording the basic audio data as audio data of 24 bits due to the limit of a bit rate, the above bit number extension method allows the lower bits of the multi-channel LPCM audio data to be stored as the extended audio data, to thereby reproduce 24-bit audio data.

Referring to Figure 13A showing a band extension unit of the audio quality enhancer 460 using an oversampling of the basic audio data, an input buffer 11 stores the data received from the basic audio decoder 456 and the extended audio decoder 458, outputs the basic audio samples having a sampling frequency of 96KHz to a digital filter 15, and outputs the extended audio samples having a sampling frequency of 192KHz to an adder 16. The digital filter 15 performs a double oversampling operation and filtering operation with respect to the input basic audio samples, and outputs the resultant audio samples having a sampling frequency of 192KHz to the adder 16. The adder 16 adds streams of the input audio samples and produces an audio sample stream having a sampling frequency of 192KHz with regard to the full band.

Figure 13B is a view showing a band extension unit of the audio quality enhancer 460 for combining the audio samples expressed as 2-band which divides the entire frequency band into two bands. The input buffer 11 outputs the extended audio samples having a frequency band of 96KHz through 192KHz and the basic audio samples having a frequency band of 0 through 96KHz, to a perfect-reconstruction-FIR-filter 17. The perfect-reconstruction-FIR-filter 17 outputs the audio samples having a frequency band of 0 through 192KHz with respect to the received audio samples. since the perfect-reconstruction-FIR-filter 17 is well-known to a person skilled in the art, 2N audio samples are output therefrom with respect to N basic audio samples and N extended audio samples.

Figure 14A shows a cross-correlation processor 24 of the audio quality enhancer 460 for channel extension. In case of a channel extension, the basic audio decoder 456 supplies the audio data of channels which can be provided by the basic audio data to the cross-correlation processor 24. The extended audio decoder 458 supplies the audio data of channels additionally provided by the extended audio data to the cross-correlation processor 24. The cross-correlation processor 24 performs a cross-correlation processing with respect to the input data, to remove the extended audio data combined in the channels of the basic audio data.

Figure 14B is a view for explaining the operation of an audio quality enhancer 460 when a cross-correlation processing described in connection with Figure 14A is not performed. In this case, the audio quality enhancer 460 supplies the audio data of various channels received from the basic audio decoder 456 and the extended audio decoder 458 to an output buffer 462 as it is.

The audio quality enhancer 460 uses units described with reference to Figures 12 through 14B, and sequentially combines a plurality of extended audio data corresponding to the basic audio data.

A video output portion 416 receives the sub-picture data output from the sub-picture decoder 410 and the video data output from the video decoder 412 (see Figure 9), converts the data so that it matches a format of a display (not shown), and outputs the converted result. The audio output portion 418 converts the decoded audio data output from the audio decoder 414 into digital audio data or an analog audio signal which is appropriate for processing the signals in amplifiers, and outputs the converted result.

Thus, the reproduction apparatus shown in Figure 9 can decode the video and sub-picture and output the decoded result, thereby reproducing pictures and acoustics using the existing DVD and the present invention DVD.

As described above, the DVD according to the present invention records the basic audio data according to the DVD-video format and the extended audio data thereby providing audio quality higher than that provided by the DVD-video format, in a plurality of audio streams according to the DVD-video format. The reproduction apparatus according to the present invention reproduces even a DVD according to the existing DVD-video format as well as reproduces the DVD according to the present invention to provide a higher audio quality. Therefore, the present invention can be compatible with the DVD-video format and brings about an effect of providing an enhanced audio quality.

While only certain embodiments of the invention have been specifically described herein, it will be apparent that numerous modifications may be made thereto without departing from the scope of the invention.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A digital versatile disc (DVD) reproduction apparatus to reproduce recorded data from a DVD having at least one title, each title having a corresponding plurality of audio streams among which a particular audio stream stores basic audio data according to a DVD-video format, at least one of the remaining audio streams stores extended audio data corresponding to the basic audio data, and an audio stream attribute of a video title set stores additional data to identify the extended audio data relating to the at least one extended audio stream, said DVD reproduction apparatus comprising:
reading means (404, 406) for reading the recorded data of one of the titles from the DVD;
syntax parsing means (408) for syntax-parsing the data read by the reading means (404, 406) and outputting the basic audio stream of the one title and the corresponding at least one extended audio stream; and
audio decoding means (414) for receiving and processing the basic audio stream containing basic audio data and each of the at least one extended audio stream containing extended audio data from the syntax parsing means (408), and outputting an audio signal having an improved audio quality using the extended audio data provided with the basic audio data.

2. The DVD reproduction apparatus according to claim 1, wherein said syntax parsing means (408) detects the additional data stored in the audio stream attribute of the video title set, and discriminates the basic audio data and the extended audio data based on the detected additional data.

3. The DVD reproduction apparatus according to claim 2, wherein said syntax parsing means (408) judges that the at least one extended audio stream following the basic audio stream relates to the basic audio stream, and simultaneously supplies both the basic audio stream and the corresponding at least one extended audio stream to said audio decoding means (414).

4. The DVD reproduction apparatus according to claim 2, wherein said syntax parsing means (408) judges the at least one extended audio stream following the basic audio stream as relating to the basic audio stream, and adds information indicating that the basic audio stream and the extended audio stream are involved with each other to the basic audio stream and the corresponding at least one extended audio stream and simultaneously supplies both the basic audio stream and the corresponding at least one extended audio stream to said audio decoding means (414).

5. The DVD reproduction apparatus according to claim 1, wherein said audio decoding means (414) comprises:
a basic audio decoder (456) to decode the basic audio stream received from said syntax parsing means, to generate a decoded basic audio signal (408);
an extended audio decoder (458) to decode the at least one extended audio stream received from said syntax parsing means, to generate a decoded extended audio signal; and
an audio quality enhancer (460) to combine the decoded basic audio signal and the decoded extended audio signal, (456; 458), to generate a digital audio signal having the improved audio quality higher than the decoded basic audio signal according to the DVD-video format.

6. The DVD reproduction apparatus according to claim 5, wherein each of the at least one extended audio stream stored in the DVD comprises an extended audio stream header and actual audio data providing the improved audio quality higher than the audio quality according to the DVD-video format, wherein the extended audio stream header comprises a number of channels, a sampling frequency of the actual audio data and a plurality of channel headers, wherein each channel header comprises a channel number, a coding mode, a usage, a quantization bit number and a sampling frequency relating to providing the improved audio quality.

7. The DVD reproduction apparatus according to claim 6, wherein the actual audio data comprises a plurality of channel numbers, a data length corresponding to each of a plurality of channel numbers, and audio data.

8. The DVD reproduction apparatus according to claim 1, wherein each of the at least one extended audio stream stored in the DVD comprises an extended audio stream header and frames containing the extended audio data, wherein the extended audio stream header comprises zones for storing data relating to an audio coding mode of the extended audio data, a sampling frequency, a quantization bit number, and a usage, and wherein the zone for storing data relating to the usage comprises zones representing a bit extension, a band extension and a channel extension of the extended audio data.
